# EUROPEAN PATENT SPECIFICATION

(11) **EP 2 220 850 B1**
(45) Date of publication and mention of the grant of the patent: **13.02.2013**
(21) Application number: 07858068.5
(22) Date of filing: 21.12.2007
(51) Int. Cl.: H04L 29/12, H04L 29/08

(54) **METHOD AND APPARATUS FOR HANDLING ACCESS TO DATA**
VERFAHREN UND VORRICHTUNG ZUR BEHANDLUNG VON DATENZUGRIFF
PROCÉDÉ ET APPAREIL DE GESTION D'ACCÈS À DES DONNÉES

(43) Date of publication of application: 25.08.2010
(73) Proprietor: Telefonaktiebolaget LM Ericsson (publ), 164 83 Stockholm (SE)
(72) Inventor: BARTOLOMÉ RODRIGO, Maria Cruz, E-28038 Madrid (ES); CHÉRCOLES SÁNCHEZ, José María, E-28037 Madrid (ES)
(74) Representative: Elzaburu Marquez, Alberto
(86) International application number: PCT/EP2007/064457
(87) International publication number: WO 2009/080118

(56) References cited:
- WO-A-02/071674
- WO-A-2006/066145
- NORTEL: "Analysis of Diameter Message Routing Optimizations for Large Scale IMS Deployments" 3GPP DRAFT; S2-062240, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG2_Arch\TSGS2_53_Lisbon\Docs, no. Lisbon; 20060626, 20 June 2006 (2006-06-20), XP050256315

## Description

### FIELD OF THE INVENTION

The present invention relates to method, apparatus and computer programs for handling access to data distributed along a plurality of databases.

### BACKGROUND

Traditionally, information and telecommunications services have been offered based on monolithic servers. Such kinds of servers comprise processing logic and data storage capabilities that allow them to process the signaling they can receive, as well as the signaling to be sent, by using data they store internally. However, and mainly for applications demanding high processing and high storage capabilities, there is a recent trend to transform some solutions based on monolithic servers into a layered architecture. This kind of architectural solution is sometimes referred as "tiering". The principle behind tiering consists on decoupling service logic processing from mere data storage.

An option to devise a tiered architecture is to deploy a plurality of front-ends FEs, and a high-performance centralized database DB accessible to the front-ends. Each of the signaling front-ends comprise the necessary signaling and processing means for providing the specific service(s) they serve, while the centralized database stores the data that can be needed by a FE for processing a service. This approach increases the service availability, since the signaling load from service clients can be distributed along the plurality of available FEs. At the same time, this solution simplifies operation and maintenance O&M and prevents data consistency problems, since only one DB is to be provisioned given that, preferably, the FEs does not store any data they have obtained from the centralized database once they have served a request.

However, the solution above has some drawbacks, such as the usually high cost of the centralized DB, its (finally) limited storage capacity and also its maximum capability to serve queries from the plurality of FEs, which can be a critical factor when dealing with high-rate signaling due to applications requiring real-time processing. Furthermore, the centralized DB offers a single point of failure, which compromises the total availability of a system depending on it.

An example of an application requiring real-time service processing is a Home Location Register HLR, or a Home Subscriber Server HSS, of a mobile telecommunications system. In such an application, FEs acting as HLRs and/or as HSSs receive service requests from a plurality of clients, such as Mobile Switching Centers/Visitor Location Registers (MSC/VLRs), Serving GPRS Support Nodes (SGSNs), Call Session Control Functions (CSCFs), etc, which require obtaining from the centralized DB the necessary data (e.g. user subscription data for serving a registration request, user location information for serving a location query, etc) for providing some services.

An alternative to overcome limitations cited above is to divide the whole amount of data into partitions to be stored into a plurality of separated DBs. For example, in the application example above, data of a first group of subscribed users can be stored in a first DB, and data of a second group of subscribed users can be stored in a second DB. By increasing the number of DBs in the pool, low latency processing and storage scalability issues can be fixed. Furthermore, the failure of a DB does not necessarily affect the total availability of the system, as only services needing data stored in said particular DB would become unavailable.

However, this kind of solution introduces a further drawback, since all the FEs need to be configured with the information stored by each individual DB, so as to access the right DB, among a plurality, when processing a service request. In the application example above, and for a given user subscribed to a mobile telecommunications system, this would imply all of the HLR or HSS FEs to be configured with the relationships between an identifier of said user and an identifier of the corresponding DB storing his related data. A similar drawback appears also in what concerns to operation and maintenance procedures.

Patent application WO 02/071674 A discloses a "User Distribution Server, UDS" that interfaces messages from clients (such as CSCFs) before a plurality of databases ("Servers 1..n"). Patent application WO 02/071674 fixes the problem of configuring the FEs (clients) cited above, however puts the configuration load into the interfacing server "UDS". According to said application, the "UDS" exchange signaling with all the databases so as to get the relationship of all the users held by each database and the corresponding database identifier. Once the "UDS" is so configured, it can attend queries from the clients. It should be therefore desirable to devise mechanisms which, for example, in a system comprising a tiered architecture, allow scaling on data storage and processing capabilities, and which minimize the impact for the rest of the system.

### SUMMARY

In one aspect, the invention relates to a method for handling access to data distributed along a plurality of databases in a system arranged according to a tiering architecture, containing a plurality of signaling front end servers and the plurality of databases, as claimed in claim 1. In further aspects, the invention also relates to an interfacing server as claimed in claim 8, and to a computer program as claimed in claim 15.

A first message comprising a first identifier is received in an interfacing server, interfacing messages before a plurality of databases, from a front end server. A second identifier usable for sending a message to the database storing data in relationship with the received first identifier is obtained, and a subsequent second message comprising the first identifier is sent from the interfacing server to said database. According to the invention, for obtaining the second identifier, the interfacing server sends the second message comprising the first identifier to said plurality of databases, and receives a reply from a database among said plurality that stores data in relationship with the first identifier comprising an identifier of said database usable as said second identifier.

In a system comprising a tiering architecture, the invention allows keeping the advantages of a solution comprising a single centralized database in what regards to simplified configuration of information clients and/or front-ends, without suffering its performance and/or storage scalability problems. The invention is, however, not limited to tiering architectures, and its advantages equally apply to systems wherein information clients access directly to the data storage(s) without intervention of signaling front-ends. Any of the databases of the plurality can be configured to store data in relationship with an identifier, which simplifies data provisioning and configuration procedures, and information of said database is dynamically obtained from the interfacing server of the invention. The interfacing server acts as a single access point for entities needing access to data stored in a number of databases, such as information clients and front-ends, without requiring them to be configured with details about how these data are actually distributed.

According to one embodiment, the identifier received from the database is stored in relationship with the first identifier received in the first message in a further storage accessible to the interfacing server. Said further storage, which can be internal or external to the interfacing server, can advantageously be checked by the interfacing server at reception of a first message, so as to determine whether the subsequent second message has to be sent to a plurality of databases, or only to one, and, thus, minimize the necessary signaling.

According to another embodiment, the interfacing server checks whether a first message requests storage of data in relationship with a first identifier contained on said message, and then: selects a database among said plurality, sends to the selected database a second message comprising the first identifier requesting to store new data in relationship with the first identifier, and stores in said further storage an identifier of said database in relationship with the received first identifier.

A storage handling as described in these embodiments allow a simplified configuration of the interfacing server in what regards to relationships between firsts and corresponding second identifiers, by either: service related messages and/or operation and maintenance related messages, as it becomes auto-configured while performing its normal interfacing functions before a plurality of databases.

Features of the invention are advantageously applicable to telecommunications systems implementing tiered architectures for some of its nodes.

According to a further embodiment, the first message is received in the interfacing server from a telecommunications server in a telecommunications network. The telecommunications server sending the first message can be: a Home Subscriber Server HSS server, or a signaling front end Home Location Register HLR server, or a data provisioning server, or an Authentication Authorization and Accounting AAA server. These servers can thus act as signaling and processing front-ends, without requiring high storage capacity, and without requiring being configured with specific knowledge, access attributes, etc, in what regards on details about the plurality of databases that store the data they need for their operation.

### BRIEF DESCRIPTION OF THE DRAWINGS

Figure 1 shows a flowchart illustrating some steps of a method according to embodiments of the invention.
Figure 2 shows a simplified view of a telecommunications system according to one embodiment of the invention.
Figure 3 shows a simplified signaling flow according to one embodiment of the invention.
Figure 4 shows a schematic representation of some functional modules of a server for handling access to data distributed along a plurality of databases according to one embodiment of the invention.

### DETAILED DESCRIPTION

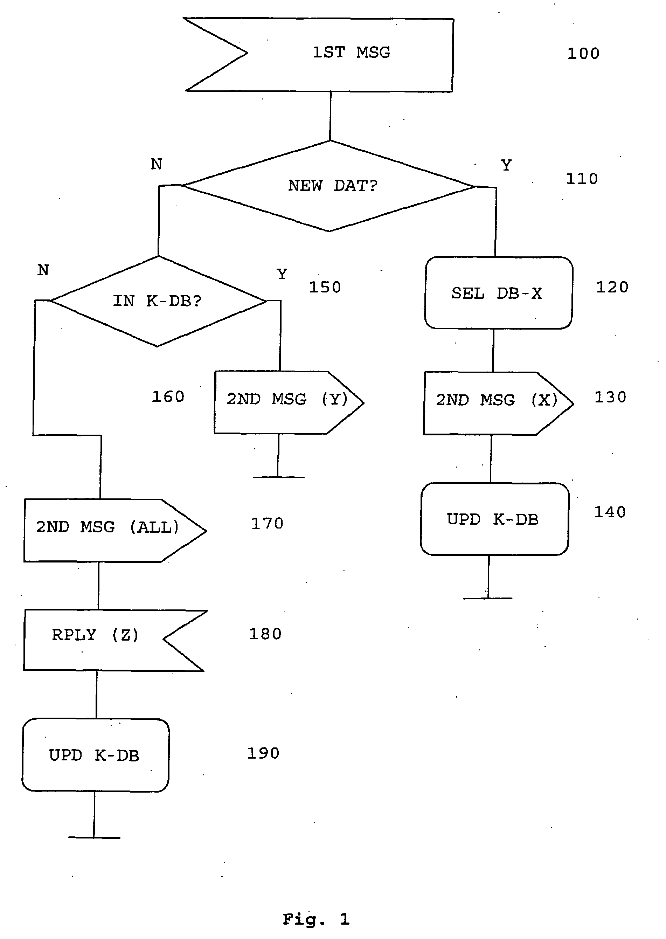

Exemplary embodiments of the invention shall now be described with reference to figures 1 to 4.

Fig.1 illustrates some steps of a method for handling access to data distributed along a plurality of DBs according to some embodiments of the invention.

Step 100 represents the arrival of a message (1ST MSG) to a server which interfaces signaling before a plurality of databases DBs, which, by virtue of the invention, constitute a single logical DB. The message of step 100 can come from a server entity which executes service logic related to a certain service, but which does not stores permanently the necessary data so as to accomplish with it. For example, the message "1ST MSG" can come from a HLR or HSS signaling front-end, FE, having received a registration request or location request and e.g. asking for the necessary subscriber and/or location information. Also, the message received in step 100 can come from a provisioning server dealing with operation and maintenance tasks and could request creation and/or modification of subscriber-related data. Similarly, the message could also come from a Authentication Authorization and Accounting AAA server which, for example, ask for credentials of a user who is being authenticated.

The method of the invention is not limited to tiering architectures, and its advantages equally apply to systems wherein information clients (e.g.: MSC/VLRs, SGSNs, application servers, AAA servers, etc) access directly to the data storage(s) without intervention of signaling front-ends.

For simplicity, in the foregoing description a message arriving to the server interfacing before the plurality of DBs (referred hereinafter as "interfacing server") from other server entity (such as a signaling front end HLR/HSS, AAA server, etc) can be referred as "first message", while subsequent messages sent from the interfacing server towards the DBs can be referred as "second messages".

Step 110 represents an optional embodiment of the invention, wherein the interfacing server checks whether the message received in step 100 contains a request for creation of new data. As cited above, this can be the case wherein a provisioning server of e.g. a mobile network operator requests a new subscription to be created for a user. In such an event, the execution continues to step 120, wherein a certain DB among the plurality (DB-X) is selected for storing the new data (e.g. subscription data, as well as subsequent dynamic data of said user). Said selection can be based on information available to the interfacing server about the plurality of available (or even suitable) DBs, and/or information about their current occupation, reported or observed response latency, quality of service QoS, etc.

Once a DB (DB-X) is selected in step 120, a second message is sent to said DB in step 130 using an identifier (X) usable to send (and subsequently route) a message to said DB. The second message of step 130 can comprise the same content as the first message received in step 100, wherein an identifier of the destination address has changed, as selected in step 120. In step 140 an (first) identifier received in the message of step 100 (e.g. a Mobile Subscriber ISDN number, MSISDN, or a Session Initiation Protocol Uniform Resource Locator, SIP-URI) is stored in relationship with an (second) identifier of the selected DB (DB-X). The storage of step 140 preferably comprises storage on a database internal to the interfacing server, or an external database that can be accessed by said server with short response times. The purpose of said further (internal or external) database (hereinafter also referred in the description as "knowledge database" K-DB) shall be described with reference to other embodiments of the invention.

If the check of step 110 yielded a negative result, or in case the feature described with reference to steps 110 to 140 is not implemented, the execution continues to step 150, wherein the K-DB is checked so as to determine whether there is stored therein an identifier of a DB (among the plurality) in relationship with an identifier received in the message of step 100. In case of a mobile telecommunications system comprising a tiering architecture, the identifier received in the message of step 100 usable for the checking of step 150 can be, e.g., a MSISDN or a SIP-URI identifying a user. In case said storage relationship exists (e.g. the relationship between these identifiers was stored in a previous flow 100-140 as described above), a second message would be sent to the corresponding DB using the stored identifier (Y). As in the case above, the second message of step 160 can comprise the same content as the message received in step 100.

An example case can be assumed for illustrating embodiments of the method wherein the K-DB is initially empty. In such a case, the processing of messages received in subsequent steps 100, and containing identifiers for which there is no DB related identifier stored yet in the K-DB, would then be processed according to steps 170 to 190, as described below. As will be apparent from the description, the use of the K-DB is not mandatory, but provides the advantage of reducing the signaling towards the back end DBs. Therefore, advantageously, the configuration of the K-DB is automatically performed by the operation of the interfacing server, as long as it receives first messages, and does not require execution of specific O&M or provisioning procedures to be manually run.

In step 170 a second message comprising at least an identifier received in the first message of step 100 is sent to more than one (preferably all) of the DBs that make up the single logical DB storage. For example, the message can be broadcasted to a plurality of DBs, if the signaling protocol so permits. Alternatively, the second message can be sent to individually to each of said DBs from the interfacing server. In addition to the received identifier, the message of step 170 can comprise all the relevant data received in the first message of step 100 (if any other). The object of the message(s) sent on step 170 is to obtain information of the DB(s), among the plurality, that stores data in relationship with a given identifier.

Next, in step 180 a positive reply is received from the DB, among the plurality, which has data stored in relationship with the identifier included in the message of step 170. More response messages could be received from other DBs, which could indicate a negative result (i.e. they do not store data in relationship with the received identifier), and which can be discarded. These (negative) response messages are not shown in Fig.1 for simplicity.

Preferably, if it can not be inferred therein, the reply message of step 180 comprises an identifier of the concerned DB (Z) and, subsequently, in step 190 the interfacing server updates accordingly the knowledge DB K-DB by storing said identifier in relationship with the identifier sent in the message of step 170. This will result in a faster distribution process for a subsequent (first) message received in a subsequent step 100 comprising the same identifier.

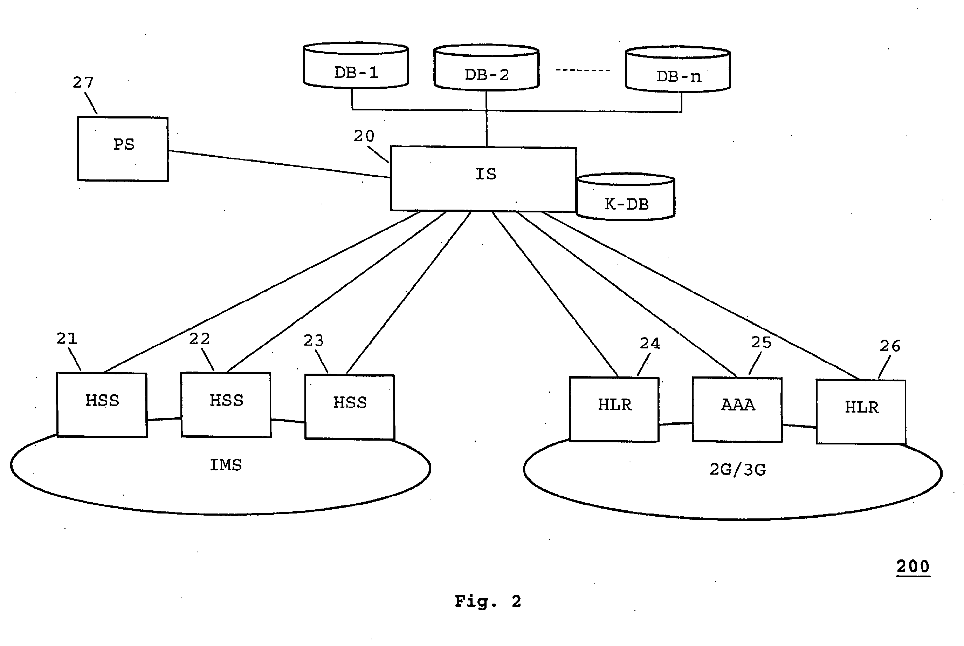

Fig.2 represents a telecommunications system 200 for illustrating some embodiments of the invention applicable therein. The system 200 comprises a 2^{nd} Generation and 3^{rd} Generation mobile telecommunications system 2G/3G and a Internet Protocol Multimedia Subsystem IMS. As those skilled would readily understand, there can be connections between the 2G/3G and IMS systems. These connections, as well as further server entities, are not shown in the schematic illustration of Fig.2 for the sake of simplicity, and are not necessary to understand the illustrated embodiments of the invention.

The IMS system is illustrated as comprising 3 Home Subscriber Servers HSSs (21, 22, 23), and the 2G/3G system is illustrated as comprising 2 Home Location Register HLRs (24, 26) and an Authentication Authorization and Accounting AAA server (25). If the telecommunications system 200 comprises a tiering architecture for decoupling processing from mere data storage, part or all of these servers (21..26) can act as signaling front-ends FEs and, thus, make up the data processing "tier" of said architecture. The system 200 can belong to a network operator having a plurality of subscribed users, some of which can take advantage of the services provided from or through the 2G/3G or IMS systems (e.g. depending on the access and/or terminal they are using in a given moment). In that case, advantageously, their related data (e.g. subscription information, location information, subscribed/activated services, etc) are kept in a single logical storage, preferably transparent to the eventual information clients (e.g. other server/nodes in system 200 -not shown in Fig.2), so that the necessary data are available to any of the IMS or 2G/3G systems. For this purpose the data storage "tier" is divided into a number of individual databases (DB-1, DB-2.., DB-N), whose number and individual storage/processing performance capacities can be adapted to fulfill with, e.g., the number of users subscribed to the operator of system 200, and/or the expected service demand.

In system 200, a provisioning server PS (27) can be entitled to set up new subscription data, and or to modify any subscriber related data.

The structure of the data storage (e.g. in terms of number of DBs, their specific addressing identifiers, etc) is preferably kept transparent for its eventual users (e.g. FEs 21 to 26, and PS 27). For this purpose, an interfacing server IS (20) is provided for interfacing messages before the plurality of DBs (DB-1, DB-2.., DB-N), and can comprise, or have access to, a knowledge DB (K-DB) as described before with reference to Fig.1.

The IS of the invention can be used as a single point of access from any application in a tiered architecture, such as front ends : 21, 22, 23, 24 26; as well as from provisioning pervers (e.g. PS 27) or application servers (not shown in Fig.2). By implementing the method of the invention, the IS hides the underlying DB structure and distribution logic, getting that all data partitions, actually distributed along a plurality of separated DBs, are regarded as just one single logical database from an application perspective, thus overcoming limitations imposed by a single physical database. Therefore, the applicability of IS and method of the invention is not limited to the telecommunications system 200 of Fig.2, used herein for illustration purposes. Furthermore, the IS and method as described herein also simplifies data provisioning processes in tiered architectures comprising a plurality of DBs, since, either or both: the IS provides a single access point to a provisioning server (PS, 27), or the appropriate DB among said plurality is easily found from the IS, which can become auto-configured in this respect as it performs its task for handling access to the stored data.

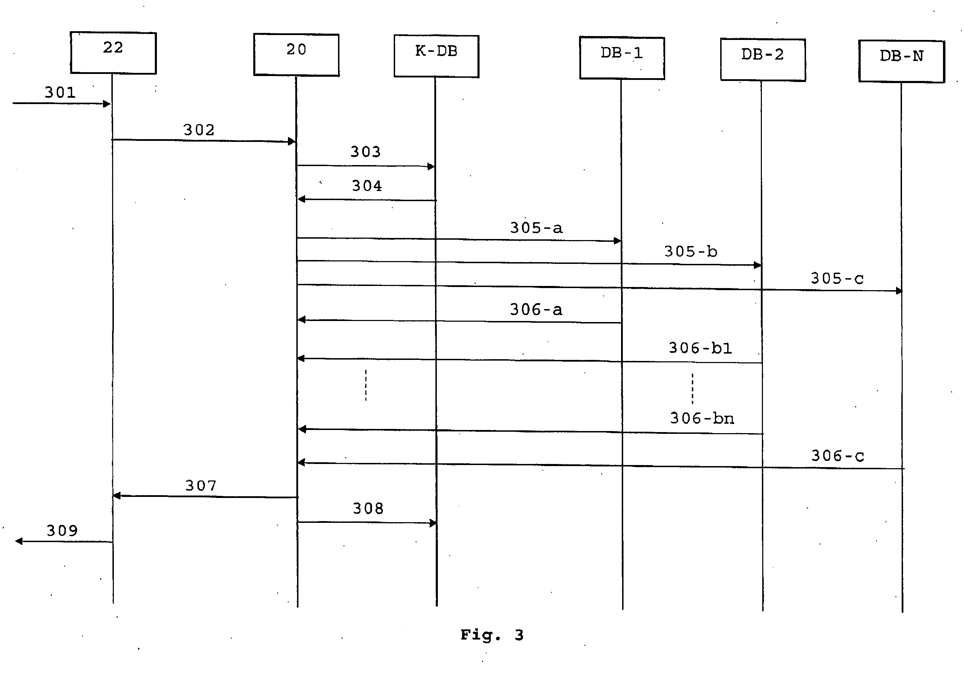

Fig.3 shows a simplified signaling flow according to one embodiment of the invention in a telecommunications system as described above with reference to Fig.2.

In flow 301 the HSS 22 receives a "DIAMETER" protocol message "Multimedia Authentication Request" MAR as a result of a user registering in the IMS from a terminal. Details on this message, its processing and subsequent reply, can be found e.g. in 3GPP Specification TS 29.228 V7.3.0 (Sept. 2006). For the processing of the MAR message, the HSS FE 22 needs some data that about the registering user that it does not keep permanently (e.g. a further request related to the same user could be received by another HSS FE, e.g. as distributed by a round-robin selection mechanism from the information clients). The necessary data are stored in one of the DBs of the pool (DB-1..DB-N), however, advantageously, HSS FE 22 (as well as other signaling front ends FE and servers of system 200) does not need to know the mapping between an identifier of a concerned user (e.g. a MSISDN, a SIP-URI, etc) and an identifier usable to address the corresponding DB storing his related data. Instead, HSS 22 needs only to be configured with an identifier usable to address the interfacing server IS (20), such as e.g. a transport address comprising IP address and "port" number, so as to send a message towards it for obtaining and/or modifying the necessary data. For the example illustrated by Fig.3, it can be assumed the protocol between the HSS 22 and the IS 20 is the "Lightweight Directory Access Protocol" LDAP. LDAP V3 is described in IETF RFCs 4510 to 4519. In short, LDAP is a protocol that is used to access data on a DB performing as a LDAP directory, where the information is structured in a tree (the so called "Directory Information Tree" DIT). Each branch in the tree is identified by the Distinguished Name DN. Then, LDAP operations use DN to point into the DIT to identify data to be accessed.

In flow 302 HSS 22 sends a LDAP Search Request message to IS 20 for searching the necessary subscriber data so as to accomplish with the processing of the MAR message received in flow 301. In the example it is assumed that subscriber data of the concerned user is structured into one sub tree whose root is identify by one DN. The entry being pointed is the LDAP Base Object. An identifier of the concerned user, that could have been received in the MAR message (such as a public or private identifier) can be included in flow 302 and used to identify the corresponding user in the IS and in the DB.

In flows 303/304 the IS 20 checks whether a user identifier received in 302 (or a corresponding one) exists in the K-DB and is stored in relationship with an identifier of a DB. If that is the case, it means that a request related to the same subscriber was already processed by the IS, and the stored DB identifier is used to forward a subsequent data request to it. However, the illustrated case assumes said identifier's relationship is not stored yet in the K-DB for said user and a request is broadcasted to a plurality of DBs (DB-1..DB-N), as illustrated by flows 305-a, 305-b and 305-c. For accomplishing with this, similar LDAP requests as the one received in flow 302 can be sent. Other protocol than LDAP could be used to communicate between IS 20 and the DBs (including also the K-DB) and, in that case, the IS 20 would require the implementation of a protocol translator. It is to be noticed that, as an alternative implementation option (not shown in Fig.3), and if the protocol so permits, the sending of the requests 305-x can comprise a single sending which can be broadcasted to a plurality of DBs. Also, if a sequential sending is used (as illustrated), the sending of a subsequent request (e.g. 305-b) can wait till a negative reply is received from a previous request (e.g. reply to 305-a).

Responses from the queried DBs are received in flows 306-x. Only the DB that holds the data for the identified subscriber provides a successful response. In the illustrated example this is DB2. Accordingly, flows 306-a and 306-c can be LDAP Search Result Done messages comprising a negative result code (e.g.: ResultCode: no such object). Requested subscriber data is returned from DB-2 in as many LDAP Search Result Entry messages as Relative Distinguished Name RDNs entries exists in the DIT for this subscriber (i.e. subscriber data is commonly stored in LDAP DBs as a sub tree, built up from a root, with branches to different levels in the tree). Once all the relevant data has been sent from DB-2, a final LDAP Search Result Done comprising a positive result code is finally sent back to the IS 20. This is illustrated by flows: 306-b1 ... 306-bn.

Subsequently, the obtained data are provided back to the requesting HSS in flow 307. These data are then used by HSS front-end 22 for processing the necessary reply to the MAR message received in flow 301 (e.g. as described in chapter 6.3.1 of the aforementioned 3GPP TS 29.228) and send a subsequent "Multimedia Authentication Answer" MAA reply message in flow 309.

In turn, flow 308 represents the IS 20 updating the (external or internally allocated) K-DB with an identifier of the DB-2 received in the interaction flows. Said identifier is stored therein in relationship with an identifier of the concerned user (e.g. an identifier received in flow 302, or a related identifier of the same user). Accordingly, a subsequent message similar as the one received in flow 302, and concerning to the same user, would not necessarily cause the IS 20 to forward/broadcast a request to a plurality of DBs, but only to DB-2 using the stored identifier of said DB.

The K-DB thus preferably comprises dynamic information that can be set by the IS 20, or by any other server making use of it. As cited earlier with reference to the method illustrated in Fig.1, the K-DB can also store additional information about the current load status, availability, average latency per operation (which can determine QoS), etc, about a plurality of DBs. This additional information can be provided by the IS 20 and/or from the DB themselves. As described earlier, the additional information stored in the K-DB can advantageously be used when, for example, data related to a newly subscribed user are to be provisioned, so as to select a suitable DB, among the plurality of DBs, that will store the corresponding data of said user. An identifier of the selected DB will be then be stored in the K-DB in relationship with an identifier of the user, so that further messages (either: traffic related messages or provisioning/maintenance related messages) received in single entry point provided by the IS 20 are forwarded from there to the right DB using its stored identifier. The validity of the information stored in the K-DB, in what concerns to a relationship between a first identifier (e.g. related to a user) and a second identifier (e.g. related to the DB storing data related to said user), can be subject to a predefined time period. This can be useful whenever the plurality of DBs are accessed directly from a O&M or provisioning center so as to reconfigure the stored information and/or even the number of DBs making up the total storage.

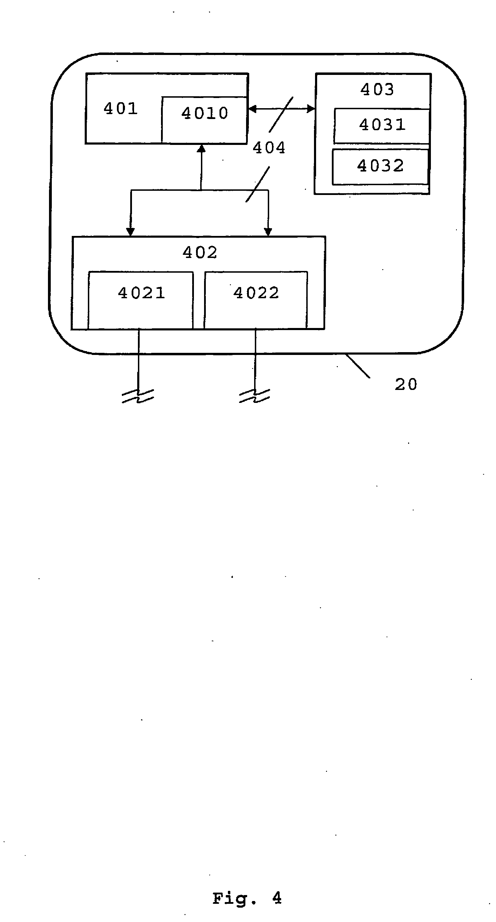

The internal simplified structure of a server handling the access to data distributed along a plurality of DBs, as the interfacing server IS (20) described heretofore, shall now be described with reference to Fig.4 considering a possible implementation as a computer-based apparatus.

The IS 20, as any other kind of server, can, regardless specific construction details, be considered as an apparatus comprising of one or more functional modules; each of them arranged to perform a specific (sub)function of the total functionality implemented by said server. Once the functionality of a server (such as the interfacing server 20) has been specified, the construction of the functional modules to build up a realization of the corresponding physical machine(s) accomplishing said server is a matter of routine work for those skilled in the art. In particular, an interfacing server 20 as described herein can be implemented as a computer-based apparatus comprising software and hardware, and can be implemented within a single physical machine, or be distributed along various cooperating physical machines. The software comprises one or more computer programs having computer readable program code that, when executed by a computer-based IS server 20 makes it to behave according to a predefined manner, as determined by the specific program instructions in said programs, which can be arranged according to any of the described embodiments of the invention. Accordingly, the description given herein with reference to Fig.4 shall describe some functional components of an interfacing server IS 20 adapted to accomplish with the functionality described heretofore, without falling into specific hardware and software construction details, which are well known by those skilled and, consequently, which are not needed to understand the invention.

The simplified internal structure shown in Fig.4 for server IS 20 comprises: a processing module 401, a communications module 402, a data storage module 403 and internal communication bus 404 which allow data communication and cooperation between them. In general, when a message is to be sent, the processing module 401 requests the communications module 402 to send the message and provides it with the necessary data, and, when a signaling message is received by the communications module, it transfers the relevant content to the processing module for triggering the necessary processing. In turn, the processing module 401 accesses the data storage module 403 to store/update/check/obtain the necessary data for the operation.

The processing module 401 can comprise one or more processors (only one processor 4010 is shown in Fig.4) which, for example, can be arranged to work in load-sharing or active-backup mode. The operation in server 20 is controlled by computer-readable program code comprising instructions that are executed by processor 4010. The execution of these instructions makes server 20 to perform according to embodiments of the invention described before.

Currently, most of the telecommunications nodes and servers are implemented by computer-based apparatuses. Accordingly, computer programs comprising computer-readable program codes are loaded in computer-based apparatuses of telecommunications systems causing them to behave according to a predefined manner, as determined by the respective program codes, which are in accordance to the specific functionality specified for the servers/nodes these apparatuses implement. Thus, those skilled in creating and/or modifying computer programs, would, without departing of the teachings of the present invention, readily apply them to create and/or modify computer programs suitable to be loaded in a computer-based server, so as to make it to behave according to any of the described embodiments.

External communications are performed via communications module 402, illustrated in Fig.4 as comprising two communication devices 4021 and 4022. Depending on different implementation alternatives, a communication device can be suited to accomplish with one or more than one communication types (i.e. communications according to one or more communication protocols and/or signaling interfaces). For example, with reference to the system of Fig.2, communications with servers 21 to 27, and with databases DB-1..DB-n, can be implemented partially or totally by communication devices 4021 and/or 4022.

Data storage module 403 stores the data needed for the operation of server 20. A data storage module in a computer-based server can comprise one or more data storage devices. In the example illustrated in Fig.4 it comprises storage devices 4031 and 4032. Memory chips and magnetic or optical discs are example of data storage devices. Depending on criteria such as data access speed for certain data, storage reliability, etc, the storage module of server 20 can comprise one or more storage devices of the same or different kind. Data storage module 403 can store the computer-readable program to be executed by processor 4010 and, for example, according to one embodiment of the invention, comprise the knowledge database K-DB.

The invention has been described with respect to some exemplary embodiments in an illustrative and non-restrictive manner. Variations can be readily apparent to those of ordinary skill in the art. For this reason, the invention is to be interpreted and limited in view of the claims.

## Claims

1. A method for handling access to data distributed along a plurality of databases in a system arranged according to a tiering architecture containing a plurality of signaling front end servers and the plurality of databases,
the method comprising the steps of:
- receiving (100) from a front end server a first message comprising a first identifier in an interfacing server (20) interfacing messages from the front end servers before said plurality of databases, and
- obtaining a second identifier of a database, among said plurality, usable for sending a message to the database storing data in relationship with the received first identifier, and
- sending (160) from the interfacing server a second message comprising the first identifier to said database;
**characterized in that**, for obtaining the second identifier related to the first identifier, the method further comprises the steps of:
- sending (170) from the interfacing server the second message comprising the first identifier to said plurality of databases, and
- receiving (180) by the interfacing server a reply from a database among said plurality that stores data in relationship with the first identifier comprising an identifier of said database usable as said second identifier.

2. The method of claim 1 further comprising the step of:
- storing (190) in relationship the identifier received in said reply and the first identifier into a further database (K-DB) accessible to said interfacing server.

3. The method of claim 2 wherein the step of storing comprises the step of:
- storing in a database belonging to the internal data storage of said interfacing server.

4. The method of claim 2 further comprising the steps of:
- checking (150) said further database from said interfacing server at reception of the first message comprising the first identifier for determining whether there is a second identifier stored therein in relationship with the received first identifier, wherein the step of sending the second message to said plurality of databases is executed if no second identifier is stored therein in relationship with the received first identifier.

5. The method of claim 2 further comprising the steps of:
- checking (110) if the received first message comprising the first identifier requests the storage of new data related to the first identifier,
- selecting (120) a database among said plurality,
- sending (130) to said selected database a second message comprising the first identifier requesting to store new data in relationship with the first identifier, and
- storing (140) in said further database an identifier of said selected database as said second identifier.

6. The method of claim 1 wherein the step of receiving a first message comprises the step of:
- receiving said first message from a telecommunications server (21, 22, 23, 24, 25, 26, 27) in a telecommunications network.

7. The method of claim 6 wherein the telecommunications server is: a signaling front end Home Subscriber Server server, or a signaling front end Home Location Register server, or a data provisioning server or a AAA server.

8. Interfacing server (20) for handling access to data distributed along a plurality of databases (DB-1, DB-2, DB-n) in a system arranged according to a tiering architecture containing a plurality of signaling front end servers and the plurality of databases, wherein the interfacing server interfaces messages from the front end servers before said plurality of databases, comprising a processor (4010) and a storage device (4031) in communication with said processor and storing instructions adapted to be executed by said processor to:
- receive (100) from a front end server a first message comprising a first identifier,
- obtain a second identifier of a database, among said plurality, usable for sending a message to the database storing data in relationship with the received first identifier, and
- send (160) a second message comprising the first identifier to said database;
**characterized in that**, for obtaining the second identifier related to the first identifier, the storage device further stores instructions adapted to be executed by said processor to:
- send (170) the second message comprising the first identifier to said plurality of databases, and
- receive (180) a reply from a database among said plurality that stores data in relationship with the first identifier comprising an identifier of said database usable as said second identifier.

9. The server of claim 8 wherein the storage device further stores instructions adapted to be executed by said processor to:
- store (190) in relationship the identifier received in said reply and the first identifier into a further database accessible to said server.

10. The server of claim 9 wherein said database belongs to an internal data storage of said server.

11. The server of claim 9 wherein the storage device further stores instructions adapted to be executed by said processor to:
- check (150) said further database at reception of the first message comprising the first identifier for determining whether there is a second identifier stored therein in relationship with the received first identifier,
wherein the sending of the second message to said plurality of databases is executed if no second identifier is stored therein in relationship with the received first identifier.

12. The server of claim 9 wherein the storage device further stores instructions adapted to be executed by said processor to:
- check (110) if the received first message comprising the first identifier requests the storage of new data related to the first identifier,
- select (120) a database among said plurality,
- send (130) to said selected database a second message comprising the first identifier requesting to store new data in relationship with the first identifier, and
- store (140) in said further database an identifier of said selected database as said second identifier.

13. The server of claim 8 wherein the storage device further stores instructions adapted to be executed by said processor to receive said first message from a telecommunications server (21, 22, 23, 24, 25, 26, 27) in a telecommunications network.

14. The server of claim 13 wherein the telecommunications server is: a signaling front end Home Subscriber Server server, or a signaling front end Home Location Register server, or a data provisioning server or a AAA server.

15. A computer program comprising computer readable program code for handling access to data distributed along a plurality of databases in a system arranged according to a tiering architecture containing a plurality of signaling front end servers and the plurality of databases, that, when loaded in a computer based apparatus interfacing messages from the front end servers before said plurality of databases, makes it to perform the steps claimed in at least one of the claims 1 to 7.

## Patentansprüche

1. Verfahren zur Behandlung des Zugriffs auf Daten, die entlang einer Vielzahl von Datenbanken in einem System verteilt sind, das gemäß einer Staffelungsarchitektur angeordnet ist und eine Vielzahl von Frontend-Signalisierungsservern und die Vielzahl von Datenbanken enthält,
wobei das Verfahren die folgenden Schritte umfasst:
- Empfangen (100) einer von einem Frontend-Server kommenden ersten Nachricht mit einer ersten Kennung in einem Interfacing-Server (20), der Nachrichten von den Frontend-Servern vor dieser Vielzahl von Datenbanken anpasst, und
- Beziehen einer zweiten Kennung einer Datenbank, unter dieser Vielzahl, die zum Senden einer Nachricht an die Datenbank verwendbar ist, die Daten in Beziehung zu der empfangenen ersten Kennung speichert, und
- Senden (160) einer zweiten Nachricht mit einer ersten Kennung vom Interfacing-Server an diese Datenbank;
**dadurch gekennzeichnet, dass**, um die zweite Kennung zu beziehen, die sich auf die erste Kennung bezieht, das Verfahren ferner die folgenden Schritte umfasst:
- vom Interfacing-Server ausgehendes Senden (170) der zweiten Nachricht mit der ersten Kennung an diese Vielzahl von Datenbanken und
- durch den Interfacing-Server erfolgendes Empfangen (180) einer Rückmeldung von einer Datenbank, unter dieser Vielzahl, die Daten in Beziehung zu der ersten Kennung speichert, mit einer Kennung dieser Datenbank, die als diese zweite Kennung verwendbar ist.

2. Verfahren nach Anspruch 1, ferner umfassend den folgenden Schritt:
- beziehungsgerechtes Speichern (190) der in dieser Rückmeldung empfangenen Kennung und der ersten Kennung in einer weiteren Datenbank (K-DB), auf die dieser Interfacing-Server zugreifen kann.

3. Verfahren nach Anspruch 2, wobei der Schritt des Speicherns den folgenden Schritt umfasst:
- Speichern in einer Datenbank, die zum internen Datenspeicher dieses Interfacing-Servers gehört.

4. Verfahren nach Anspruch 2, ferner mit den folgenden Schritten:
- Prüfen (150) dieser weiteren Datenbank von diesem Interfacing-Server aus bei Empfang der ersten Nachricht mit der ersten Kennung, um zu bestimmen, ob dort eine zweite Kennung in Beziehung zu der empfangenen ersten Kennung gespeichert ist, wobei der Schritt des Sendens der zweiten Nachricht an diese Vielzahl von Datenbanken ausgeführt wird, wenn dort keine zweite Kennung in Beziehung zu der empfangenen ersten Kennung gespeichert ist.

5. Verfahren nach Anspruch 2, ferner mit den folgenden Schritten:
- Prüfen (110), ob die empfangene erste Nachricht mit der ersten Kennung die Speicherung von neuen Daten fordert, die sich auf die erste Kennung beziehen,
- Auswählen (120) einer Datenbank unter dieser Vielzahl,
- an diese ausgewählte Datenbank erfolgendes Senden (130) einer zweiten Nachricht mit der ersten Kennung, die fordert, neue Daten in Beziehung zu der ersten Kennung zu speichern, und
- Speichern (140) einer Kennung dieser ausgewählten Datenbank als diese zweite Kennung in dieser weiteren Datenbank.

6. Verfahren nach Anspruch 1, wobei der Schritt des Empfangens einer ersten Nachricht den folgenden Schritt umfasst:
- Empfangen dieser ersten Nachricht von einem Telekommunikationssserver (21, 22, 23, 24, 25, 26, 27) in einem Telekommunikationsnetz.

7. Verfahren nach Anspruch 6, wobei der Telekommunikationsserver Folgendes ist:
ein Frontend Home Subscriber Server-Signalisierungsserver oder ein Frontend Home Location Register-Signalisierungsserver oder ein Datenbereitstellungsserver oder ein AAA-Server.

8. Interfacing-Server (20) zur Behandlung des Zugriffs auf Daten, die entlang einer Vielzahl von Datenbanken (DB-1, DB-2, DB-n) in einem System verteilt sind, das gemäß einer Staffelungsarchitektur angeordnet ist und eine Vielzahl von Frontend-Signalisierungsservern und die Vielzahl von Datenbanken enthält, wobei der Interfacing-Server Nachrichten von den Frontend-Servern vor dieser Vielzahl von Datenbanken anpasst, umfassend einen Prozessor (4010) und eine Speicherungsvorrichtung (4031) in Kommunikation mit diesem Prozessor und Speicheranweisungen, die geeignet sind, durch diesen Prozessor ausgeführt werden, wie folgt:
- Empfangen (100) einer ersten Nachricht mit einer ersten Kennung von einem Frontend-Server,
- Beziehen einer zweiten Kennung einer Datenbank, unter dieser Vielzahl, die verwendbar ist zum Senden einer Nachricht an die Datenbank, die Daten in Beziehung zu der empfangenen ersten Kennung speichert, und
- Senden (160) einer zweiten Nachricht mit einer ersten Kennung vom Interfacing-Server an diese Datenbank;
**dadurch gekennzeichnet, dass**, um die zweite Kennung zu beziehen, die sich auf die erste Kennung bezieht, die Speicherungsvorrichtung ferner Anweisungen speichert, die geeignet sind, durch diesen Prozessor ausgeführt zu werden, wie folgt:
- Senden (170) der zweiten Nachricht mit der ersten Kennung an diese Vielzahl von Datenbanken und
- Empfangen (180) einer Rückmeldung von einer Datenbank, unter dieser Vielzahl, die Daten in Beziehung zu der ersten Kennung speichert, mit einer Kennung dieser Datenbank, die als diese zweite Kennung verwendbar ist.

9. Server nach Anspruch 8, wobei die Speicherungsvorrichtung ferner Anweisungen speichert, die geeignet sind, durch diesen Prozessor ausgeführt zu werden, wie folgt:
- beziehungsgerechtes Speichern (190) der in dieser Rückmeldung empfangenen Kennung und der ersten Kennung in einer weiteren Datenbank, auf die dieser Server zugreifen kann.

10. Server nach Anspruch 9, wobei diese Datenbank zu einem internen Datenspeicher dieses Servers gehört.

11. Server nach Anspruch 9, wobei die Speichervorrichtung ferner Anweisungen speichert, die geeignet sind, durch diesen Prozessor ausgeführt zu werden, wie folgt:
- Prüfen (150) dieser weiteren Datenbank bei Empfang der ersten Nachricht mit der ersten Kennung, um zu bestimmen, ob dort eine zweite Kennung in Beziehung zu der empfangenen ersten Kennung gespeichert ist,
wobei das Senden der zweiten Nachricht an diese Vielzahl von Datenbanken ausgeführt wird, wenn dort keine zweite Kennung in Beziehung zu der empfangenen ersten Kennung gespeichert ist.

12. Server nach Anspruch 9, wobei die Speicherungsvorrichtung ferner Anweisungen speichert, die geeignet sind, durch diesen Prozessor ausgeführt zu werden, wie folgt:
- Prüfen (110), ob die empfangene erste Nachricht mit der ersten Kennung die Speicherung von neuen Daten fordert, die sich auf die erste Kennung beziehen,
- Auswählen (120) eine Datenbank unter dieser Vielzahl,
- an diese ausgewählte Datenbank erfolgendes Senden (130) einer zweiten Nachricht mit der ersten Kennung, die fordert, neue Daten in Beziehung zu der ersten Kennung zu speichern, und
- Speichern (140) einer Kennung dieser ausgewählten Datenbank als diese zweite Kennung in dieser weiteren Datenbank.

13. Server nach Anspruch 8, wobei die Speicherungsvorrichtung ferner Anweisungen speichert, die geeignet sind, durch den Prozessor ausgeführt zu werden, um diese erste Nachricht von einem Telekommunikationsserver (21, 22, 23, 24, 25, 26, 27) in einem Telekommunikationsnetz zu empfangen.

14. Server nach Anspruch 13, wobei der Telekommunikationsserver Folgendes ist: ein Frontend Home Subscriber Server-Signalisierungsserver oder ein Frontend Home Location Register- Signalisierungsserver oder ein Datenbereitstellungsserver oder ein AAA-Server.

15. Computerprogramm mit computerlesbarem Programmcode zur Behandlung des Zugriffs auf Daten, die entlang einer Vielzahl von Datenbanken in einem System verteilt sind, das gemäß einer Staffelungsarchitektur angeordnet ist und eine Vielzahl von Frontend-Signalisierungsservern und die Vielzahl von Datenbanken enthält, wobei das Computerprogramm, wenn es in einer computergestützten Vorrichtung geladen ist, das die Nachrichten von den Frontend-Servern vor dieser Vielzahl von Datenbanken anpasst, bewirkt, dass es die Schritte nach mindestens einem der Ansprüche 1 bis 7 durchführt.

## Revendications

1. Procédé destiné à gérer l'accès à des données distribuées sur une pluralité de bases de données dans un système agencé selon une architecture de hiérarchisation contenant une pluralité de serveurs frontaux de signalisation et la pluralité de bases de données,
le procédé comprenant les étapes ci-dessous consistant à :
- recevoir (100), à partir d'un serveur frontal, un premier message comprenant un premier identifiant dans un serveur d'interface (20) interfaçant des messages à partir des serveurs frontaux avant ladite pluralité de bases de données; et
- obtenir un second identifiant d'une base de données, parmi ladite pluralité de bases de données, utilisable pour envoyer un message à la base de données stockant des données en relation avec le premier identifiant reçu ; et
- envoyer (160), à partir du serveur d'interface, un second message comprenant le premier identifiant à ladite base de données;
**caractérisé en ce que**, pour obtenir le second identifiant connexe au premier identifiant, le procédé comprend en outre les étapes ci-dessous consistant à :
- envoyer (170), à partir du serveur d'interface, le second message comprenant le premier identifiant à ladite pluralité de bases de données; et
- recevoir (180), par le biais du serveur d'interface, une réponse en provenance d'une base de données, parmi ladite pluralité de bases de données qui stocke des données en relation avec le premier identifiant, comprenant un identifiant de ladite base de données utilisable en qualité dudit second identifiant.

2. Procédé selon la revendication 1, comprenant en outre l'étape ci-dessous consistant à :
- stocker (190), en les mettant en relation, l'identifiant reçu dans ladite réponse et le premier identifiant, dans une base de données supplémentaire (K-DB) accessible par ledit serveur d'interface.

3. Procédé selon la revendication 2, dans lequel l'étape de stockage comprend l'étape ci-dessous consistant à :
- stocker les identifiants dans une base de données appartenant à la mémoire de stockage de données interne dudit serveur d'interface.

4. Procédé selon la revendication 2, comprenant en outre les étapes ci-dessous consistant à :
- vérifier (150) ladite base de données supplémentaire dudit serveur d'interface, lors de la réception du premier message comprenant le premier identifiant, en vue de déterminer s'il existe un second identifiant stocké dans celle-ci en relation avec le premier identifiant reçu,
dans lequel l'étape d'envoi du second message à ladite pluralité de bases de données est exécutée si aucun second identifiant n'est stocké dans celle-ci en relation avec le premier identifiant reçu.

5. Procédé selon la revendication 2, comprenant en outre les étapes ci-dessous consistant à :
- vérifier (110) si le premier message reçu comprenant le premier identifiant demande le stockage de nouvelles données connexes au premier identifiant ;
- sélectionner (120) une base de données parmi ladite pluralité de bases de données;
- envoyer (130), à ladite base de données sélectionnée, un second message comprenant le premier identifiant demandant de stocker de nouvelles données en relation avec le premier identifiant ; et
- stocker (140), dans ladite base de données supplémentaire, un identifiant de ladite base de données sélectionnée, en qualité dudit second identifiant.

6. Procédé selon la revendication 1, dans lequel l'étape de réception d'un premier message comprend l'étape ci-dessous consistant à :
- recevoir ledit premier message à partir d'un serveur de télécommunication (21, 22, 23, 24, 25, 26, 27) dans un réseau de télécommunication.

7. Procédé selon la revendication 6, dans lequel le serveur de télécommunication est : un serveur d'abonnés résidentiels frontal de signalisation, ou un serveur d'enregistreur de localisation nominal frontal de signalisation, ou un serveur de fourniture de données, ou un serveur AAA.

8. Serveur d'interface (20) destiné à gérer l'accès à des données distribuées sur une pluralité de bases de données (DB-1, DB-2, DB-n) dans un système agencé selon une architecture de hiérarchisation contenant une pluralité de serveurs frontaux de signalisation et la pluralité de bases de données, dans lequel le serveur d'interface interface des messages à partir des serveurs frontaux avant ladite pluralité de bases de données, comprenant un processeur (4010) et un dispositif de stockage (4031) en communication avec ledit processeur et stockant des instructions aptes à être exécutées par ledit processeur pour :
- recevoir (100), à partir d'un serveur frontal, un premier message comprenant un premier identifiant ;
- obtenir un second identifiant d'une base de données, parmi ladite pluralité de bases de données, utilisable pour envoyer un message à la base de données stockant des données en relation avec le premier identifiant reçu ; et
- envoyer (160) un second message comprenant le premier identifiant à ladite base de données;
**caractérisé en ce que**, pour obtenir le second identifiant connexe au premier identifiant, le dispositif de stockage stocke en outre des instructions aptes à être exécutées par ledit processeur pour :
- envoyer (170), le second message comprenant le premier identifiant à ladite pluralité de bases de données ; et
- recevoir (180) une réponse en provenance d'une base de données, parmi ladite pluralité de bases de données qui stocke des données en relation avec le premier identifiant, comprenant un identifiant de ladite base de données utilisable en qualité dudit second identifiant.

9. Serveur selon la revendication 8, dans lequel le dispositif de stockage stocke en outre des instructions aptes à être exécutées par ledit processeur pour :
- stocker (190), en les mettant en relation, l'identifiant reçu dans ladite réponse et le premier identifiant, dans une base de données supplémentaire accessible par ledit serveur d'interface.

10. Serveur selon la revendication 9, dans lequel ladite base de données appartient à un stockage de données interne dudit serveur.

11. Serveur selon la revendication 9, dans lequel le dispositif de stockage stocke en outre des instructions aptes à être exécutées par ledit processeur pour :
- vérifier (150) ladite base de données supplémentaire, lors de la réception du premier message comprenant le premier identifiant, en vue de déterminer s'il existe un second identifiant stocké dans celle-ci en relation avec le premier identifiant reçu,
dans lequel l'envoi du second message à ladite pluralité de bases de données est exécuté si aucun second identifiant n'est stocké dans celle-ci en relation avec le premier identifiant reçu.

12. Serveur selon la revendication 9, dans lequel le dispositif de stockage stocke en outre des instructions aptes à être exécutées par ledit processeur pour :
- vérifier (110) si le premier message reçu comprenant le premier identifiant demande le stockage de nouvelles données connexes au premier identifiant ;
- sélectionner (120) une base de données parmi ladite pluralité de bases de données;
- envoyer (130), à ladite base de données sélectionnée, un second message comprenant le premier identifiant demandant de stocker de nouvelles données en relation avec le premier identifiant ; et
- stocker (140), dans ladite base de données supplémentaire, un identifiant de ladite base de données sélectionnée, en qualité dudit second identifiant.

13. Serveur selon la revendication 8, dans lequel le dispositif de stockage stocke en outre des instructions aptes à être exécutées par ledit processeur pour recevoir ledit premier message à partir d'un serveur de télécommunication (21, 22, 23, 24, 25, 26, 27) dans un réseau de télécommunication.

14. Serveur selon la revendication 13, dans lequel le serveur de télécommunication est : un serveur d'abonnés résidentiels frontal de signalisation, ou un serveur d'enregistreur de localisation nominal frontal de signalisation, ou un serveur de fourniture de données, ou un serveur AAA.

15. Programme informatique comprenant du code de programme lisible par ordinateur pour gérer l'accès à des données distribuées sur une pluralité de bases de données dans un système agencé selon une architecture de hiérarchisation contenant une pluralité de serveurs frontaux de signalisation et la pluralité de bases de données, lequel, lorsqu'il est chargé dans un dispositif informatique interfaçant des messages en provenance des serveurs frontaux avant ladite pluralité de bases de données, amène le programme informatique à exécuter les étapes selon au moins l'une quelconque des revendications 1 à 7.
